# FASCICULE DE BREVET EUROPEEN

(11) **EP 3 679 620 B1**
(45) Date de publication et mention de la délivrance du brevet: **11.08.2021**
(21) Numéro de dépôt: 18800734.8
(22) Date de dépôt: 26.10.2018
(51) Int. Cl.: H01M 8/12, H01M 8/2425, H01M 8/04014, H01M 8/04029, H01M 8/04007, H01M 8/248, H01M 8/0271, H01M 8/124

(54) **ENSEMBLE D'UN EMPILEMENT À OXYDES SOLIDES DE TYPE SOEC/SOFC ET D'UN SYSTÈME DE SERRAGE AVEC SYSTÈME DE SURCHAUFFE DES GAZ INTÉGRÉ**
STAPELANORDNUNG MIT FESTOXIDEN VOM TYP SOEC/SOFC UND SPANNVORRICHTUNG MIT EINGEBAUTEM ÜBERHITZSYSTEM DER GASEN
STACK ASSEMBLY OF SOLID OXIDE CELLS SOEC/SOFC AND TIGHTENING SYSTEM WITH AN INTEGRATED OVERHEAT SYSTEM OF THE GASES

(30) Priorité: 26.10.2017 FR 1760114
(43) Date de publication de la demande: 15.07.2020
(73) Titulaire: Commissariat à l'énergie atomique et aux énergies alternatives, 75015 Paris (FR)
(72) Inventeur: PLANQUE, Michel, 38180 Seyssins (FR); BERNARD, Charlotte, 74130 Contamine Sur Arve (FR); ROUX, Guilhem, 38120 Saint-Egreve (FR)
(74) Mandataire: Brevalex
(86) Numéro de dépôt international: PCT/FR2018/052663
(87) Numéro de publication internationale: WO 2019/081866

(56) Documents cités:
- EP-A1- 1 705 741
- EP-A1- 3 035 430
- WO-A2-2004/077587
- WO-A2-2005/060028

## Description

### DOMAINE TECHNIQUE

La présente invention se rapporte au domaine général de l'électrolyse de l'eau à haute température (EHT), en particulier l'électrolyse de la vapeur d'eau à haute température (EVHT), respectivement désignées par les appellations anglaises « High Temperature Electrolysis » (HTE) et « High Temperature Steam Electrolysis » (HTSE), de l'électrolyse du dioxyde de carbone (CO₂), voire encore de la co-électrolyse de l'eau à haute température (EHT) avec le dioxyde de carbone (CO₂).

Plus précisément, l'invention se rapporte au domaine des électrolyseurs à oxydes solides à haute température, désignés habituellement par l'acronyme SOEC (pour « Solide Oxide Electrolyzer Cell » en anglais).

Elle concerne également le domaine des piles à combustible à oxydes solides à haute température, désignées habituellement par l'acronyme SOFC (pour « Solid Oxide Fuel Cells » en anglais).

Ainsi, de façon plus générale, l'invention se réfère au domaine des empilements à oxydes solides de type SOEC/SOFC fonctionnant à haute température.

Plus précisément, l'invention concerne un ensemble comprenant un empilement à oxydes solides de type SOEC/SOFC et un système de serrage de l'empilement avec un système intégré de surchauffe des gaz en entrée de l'empilement, ainsi qu'un procédé de fabrication d'un tel système de surchauffe des gaz.

### ÉTAT DE LA TECHNIQUE ANTÉRIEURE

Dans le cadre d'un électrolyseur à oxydes solides à haute température de type SOEC, il s'agit de transformer par le biais d'un courant électrique, au sein d'un même dispositif électrochimique, la vapeur d'eau (H₂O) en dihydrogène (H₂) et en dioxygène (O₂), et/ou encore de transformer le dioxyde de carbone (CO₂) en monoxyde de carbone (CO) et en dioxygène (O₂). Dans le cadre d'une pile à combustible à oxydes solides à haute température de type SOFC, le fonctionnement est inverse pour produire un courant électrique et de la chaleur en étant alimentée en dihydrogène (H₂) et en dioxygène (O₂), typiquement en air et en gaz naturel, à savoir par du méthane (CH₄). Par souci de simplicité, la description suivante privilégie le fonctionnement d'un électrolyseur à oxydes solides à haute température de type SOEC réalisant l'électrolyse de l'eau. Toutefois, ce fonctionnement est applicable à l'électrolyse du dioxyde de carbone (CO₂), voire encore de la co-électrolyse de l'eau à haute température (EHT) avec le dioxyde de carbone (CO₂). De plus, ce fonctionnement est transposable au cas d'une pile à combustible à oxydes solides à haute température de type SOFC.

Pour réaliser l'électrolyse de l'eau, il est avantageux de la réaliser à haute température, typiquement entre 600 et 1000°C, parce qu'il est plus avantageux d'électrolyser de la vapeur d'eau que de l'eau liquide et parce qu'une partie de l'énergie nécessaire à la réaction peut être apportée par de la chaleur, moins chère que l'électricité.

Pour mettre en œuvre l'électrolyse de l'eau à haute température (EHT), un électrolyseur à oxydes solides à haute température de type SOEC est constitué d'un empilement de motifs élémentaires comportant chacun une cellule d'électrolyse à oxyde solide, ou encore cellule électrochimique, constituée de trois couches anode/électrolyte/cathode superposées l'une sur l'autre, et de plaques d'interconnexion en alliages métalliques, aussi appelées plaques bipolaires ou interconnecteurs. Chaque cellule électrochimique est enserrée entre deux plaques d'interconnexion. Un électrolyseur à oxydes solides à haute température de type SOEC est alors un empilement alterné de cellules électrochimiques et d'interconnecteurs. Une pile à combustible à oxydes solides à haute température de type SOFC est constituée du même type d'empilement de motifs élémentaires. Cette technologie à haute température étant réversible, le même empilement peut fonctionner en mode électrolyse et produire de l'hydrogène et de l'oxygène à partir d'eau et d'électricité, ou en mode pile à combustible et produire de l'électricité à partir d'hydrogène et d'oxygène.

Chaque cellule électrochimique correspond à un assemblage électrolyte/électrodes, qui est typiquement un assemblage multicouche en céramique dont l'électrolyte est formé par une couche centrale conductrice d'ions, cette couche étant solide, dense et étanche, et enserrée entre les deux couches poreuses formant les électrodes. Il est à noter que des couches supplémentaires peuvent exister, mais qui ne servent qu'à améliorer l'une ou plusieurs des couches déjà décrites.

Les dispositifs d'interconnexion, électrique et fluidique, sont des conducteurs électroniques qui assurent, d'un point de vue électrique, la connexion de chaque cellule électrochimique de motif élémentaire dans l'empilement de motifs élémentaires, garantissant le contact électrique entre une face et la cathode d'une cellule et entre l'autre face et l'anode de la cellule suivante, et d'un point de vue fluidique, combinant ainsi la production de chacune des cellules. Les interconnecteurs assurent ainsi les fonctions d'amenée et de collecte de courant électrique et délimitent des compartiments de circulation des gaz, pour la distribution et/ou la collecte.

Plus précisément, les interconnecteurs ont pour fonction principale d'assurer le passage du courant électrique mais aussi la circulation des gaz au voisinage de chaque cellule (à savoir : vapeur d'eau injectée, hydrogène et oxygène extraits pour l'électrolyse EHT; air et combustible dont l'hydrogène injecté et eau extraite pour une pile SOFC), et de séparer les compartiments anodiques et cathodiques de deux cellules adjacentes, qui sont les compartiments de circulation des gaz du côté respectivement des anodes et des cathodes des cellules.

En particulier, pour un électrolyseur à oxydes solides à haute température de type SOEC, le compartiment cathodique comporte la vapeur d'eau et l'hydrogène, produit de la réaction électrochimique, tandis que le compartiment anodique comporte un gaz drainant, si présent, et de l'oxygène, autre produit de la réaction électrochimique. Pour une pile à combustible à oxydes solides à haute température de type SOFC, le compartiment anodique comporte le carburant, tandis que le compartiment cathodique comporte le comburant.

Pour réaliser l'électrolyse de la vapeur d'eau à haute température (EHT), on injecte de la vapeur d'eau (H₂O) dans le compartiment cathodique. Sous l'effet du courant électrique appliqué à la cellule, la dissociation des molécules d'eau sous forme de vapeur est réalisée à l'interface entre l'électrode à hydrogène (cathode) et l'électrolyte : cette dissociation produit du gaz dihydrogène (H₂) et des ions oxygène (O²⁻). Le dihydrogène (H₂) est collecté et évacué en sortie de compartiment à hydrogène. Les ions oxygène (O²⁻) migrent à travers l'électrolyte et se recombinent en dioxygène (O₂) à l'interface entre l'électrolyte et l'électrode à oxygène (anode). Un gaz drainant, tel que de l'air, peut circuler au niveau de l'anode et ainsi collecter l'oxygène généré sous forme gazeuse à l'anode.

Pour assurer le fonctionnement d'une pile à combustible à oxydes solides (SOFC), on injecte de l'air (oxygène) dans le compartiment cathodique de la pile et de l'hydrogène dans le compartiment anodique. L'oxygène de l'air va se dissocier en ions O²⁻. Ces ions vont migrer dans l'électrolyte de la cathode vers l'anode pour oxyder l'hydrogène et former de l'eau avec une production simultanée d'électricité. En pile SOFC, tout comme en électrolyse SOEC, la vapeur d'eau se trouve dans le compartiment de dihydrogène (H₂). Seule la polarité est inversée.

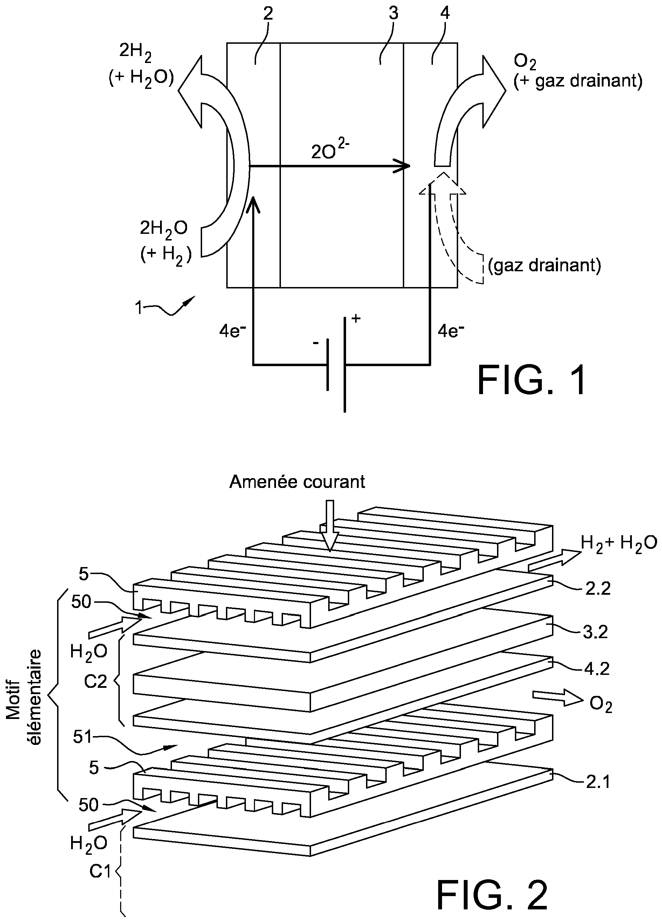

A titre d'illustration, la figure 1 représente une vue schématique montrant le principe de fonctionnement d'un électrolyseur à oxydes solides à haute température de type SOEC. La fonction d'un tel électrolyseur est de transformer la vapeur d'eau en hydrogène et en oxygène selon la réaction électrochimique suivante :

2 H₂O → 2 H₂ + O₂.

Cette réaction est réalisée par voie électrochimique dans les cellules de l'électrolyseur. Comme schématisée sur la figure 1, chaque cellule d'électrolyse élémentaire 1 est formée d'une cathode 2 et d'une anode 4, placées de part et d'autre d'un électrolyte solide 3. Les deux électrodes (cathode et anode) 2 et 4 sont des conducteurs électroniques et/ou ioniques, en matériau poreux, et l'électrolyte 3 est étanche au gaz, isolant électronique et conducteur ionique. L'électrolyte 3 peut être en particulier un conducteur anionique, plus précisément un conducteur anionique des ions O²⁻ et l'électrolyseur est alors dénommé électrolyseur anionique, par opposition aux électrolytes protoniques (H⁺).

Les réactions électrochimiques se font à l'interface entre chacun des conducteurs électroniques et le conducteur ionique.

A la cathode 2, la demi-réaction est la suivante :

2 H₂O + 4 e⁻ → 2 H₂ + 2 O²⁻.

A l'anode 4, la demi-réaction est la suivante:

2 O²⁻ → O₂ + 4 e⁻.

L'électrolyte 3, intercalé entre les deux électrodes 2 et 4, est le lieu de migration des ions O²⁻ sous l'effet du champ électrique créé par la différence de potentiel imposée entre l'anode 4 et la cathode 2.

Comme illustré entre parenthèses sur la figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air, peut en outre être injecté en entrée pour évacuer l'oxygène produit. L'injection d'un gaz drainant a pour fonction supplémentaire de jouer le rôle de régulateur thermique.

Un électrolyseur, ou réacteur d'électrolyse, élémentaire est constitué d'une cellule élémentaire telle que décrite ci-dessus, avec une cathode 2, un électrolyte 3, et une anode 4, et de deux interconnecteurs qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des interconnecteurs. L'ensemble est positionné entre deux plaques d'interconnexion d'extrémité qui supportent les alimentations électriques et des alimentations en gaz de l'électrolyseur (réacteur d'électrolyse).

Un électrolyseur à oxydes solides à haute température de type SOEC comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Comme indiqué précédemment, les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, le compartiment dit cathodique a pour fonction la distribution du courant électrique et de la vapeur d'eau ainsi que la récupération de l'hydrogène à la cathode en contact.

Le compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur à oxydes solides à haute température de type SOEC selon l'art antérieur. Cet électrolyseur comporte une pluralité de cellules d'électrolyse élémentaires C1, C2, de type à oxydes solides (SOEC), empilées alternativement avec des interconnecteurs 5. Chaque cellule C1, C2 est constituée d'une cathode 2.1, 2.2 et d'une anode (seule l'anode 4.2 de la cellule C2 est représentée), entre lesquelles est disposé un électrolyte (seul l'électrolyte 3.2 de la cellule C2 est représenté).

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. La collecte de l'hydrogène produit et de la vapeur d'eau résiduelle à la cathode 2.1, 2.2 est effectuée dans le compartiment cathodique 50 en aval de la cellule C1, C2 après dissociation de la vapeur d'eau par celle-ci. La collecte de l'oxygène produit à l'anode 4.2 est effectuée dans le compartiment anodique 51 en aval de la cellule C1, C2 après dissociation de la vapeur d'eau par celle-ci. L'interconnecteur 5 assure le passage du courant entre les cellules C1 et C2 par contact direct avec les électrodes adjacentes, c'est-à-dire entre l'anode 4.2 et la cathode 2.1.

Les conditions de fonctionnement d'un électrolyseur à oxydes solides à haute température (SOEC) étant très proches de celles d'une pile à combustible à oxydes solides (SOFC), les mêmes contraintes technologiques se retrouvent.

Ainsi, le bon fonctionnement de tels empilements à oxydes solides de type SOEC/SOFC fonctionnant à haute température requiert principalement de satisfaire aux points énoncés ci-après.

Tout d'abord, il est nécessaire d'avoir une isolation électrique entre deux interconnecteurs successifs sous peine de court-circuiter la cellule électrochimique, mais aussi un bon contact électrique et une surface de contact suffisante entre une cellule et un interconnecteur. La plus faible résistance ohmique possible est recherchée entre cellules et interconnecteurs.

Par ailleurs, il faut disposer d'une étanchéité entre les compartiments anodiques et cathodiques sous peine d'avoir une recombinaison des gaz produits entraînant une baisse de rendement et surtout l'apparition de points chauds endommageant l'empilement.

Enfin, il est indispensable d'avoir une bonne distribution des gaz à la fois en entrée et en récupération des produits sous peine de perte de rendement, d'inhomogénéité de pression et de température au sein des différents motifs élémentaires, voire de dégradations rédhibitoires des cellules électrochimiques.

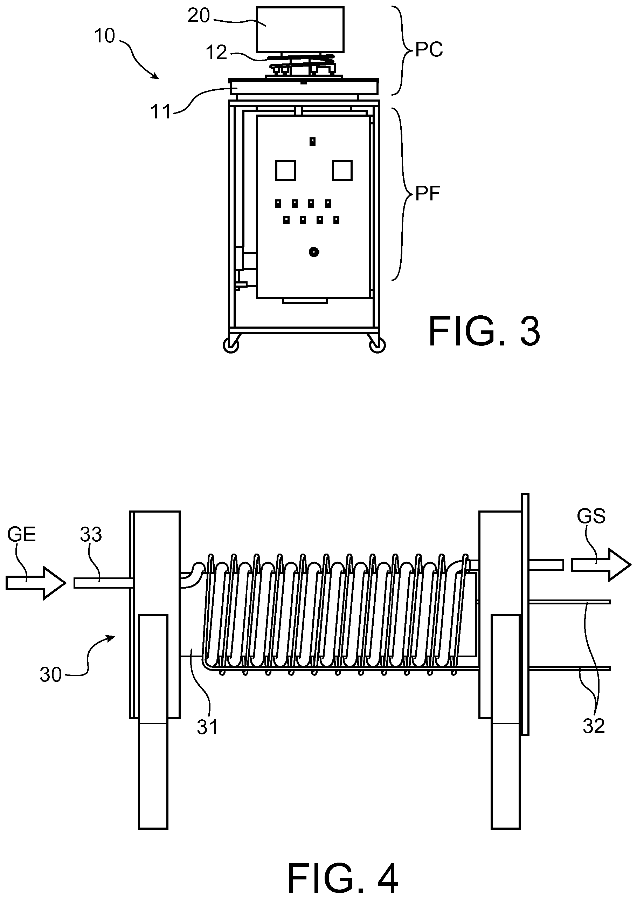

Les gaz entrants et sortants dans un empilement d'électrolyse à haute température (SOEC) ou de pile à combustible (SOFC) fonctionnant à haute température peuvent être gérés par le biais de dispositifs appropriés d'un four tel que celui illustré en référence à la figure 3.

Le four 10 comporte ainsi des parties froides PF et des parties chaudes PC, ces dernières comprenant la sole de four 11, un tube en boucle 12 pour gérer les entrées et sorties de gaz et l'empilement 20, encore appelé « stack », d'électrolyse à haute température (SOEC) ou de pile à combustible (SOFC).

De façon classique, il existe deux techniques principales pour réaliser la surchauffe des gaz d'entrée dans un empilement d'électrolyse à haute température (SOEC) ou de pile à combustible (SOFC).

Tout d'abord, comme représenté schématiquement par le tube en boucle 12 sur la figure 3, il est possible d'utiliser des longueurs de tube enroulées au droit des résistances chauffantes d'un four 10 dans la partie chaude PC. Les gaz auront été préalablement portés à une température d'environ 500°C en sortie d'échangeurs si cela est prévu par le système. Alors, ce ou ces tubes de surchauffe 12 des gaz permettent de gagner environ 300°C de plus en utilisant le rayonnement thermique des résistances du four 10 et du stack 20, avant d'être introduits dans le stack 20.

Par ailleurs, il est également connu de faire passer les gaz par des chauffeurs électriques 30 tels que celui représenté sur la figure 4. Un tel chauffeur électrique 30 s'apparente à un ensemble massif comprenant une masse inertielle 31 en acier, une résistance chauffante 32 et un tube de conduite des gaz 33 enroulé sur la masse inertielle 31. Sur la figure 4 sont également représentés les gaz entrants GE et les gaz sortants GS. Ces chauffeurs électriques 30 sont chargés de porter les gaz entrants GE de 20°C à une température d'environ 800°C avant l'introduction des gaz sortants GS dans le stack 20.

Le bon fonctionnement de ces deux techniques principales énoncées précédemment nécessite une température très précise en entrée de l'empilement ou stack 20 afin de garantir le bon fonctionnement de l'ensemble.

La première technique qui, après passage des gaz dans les échangeurs, récupère le rayonnement des résistances du four pour monter les gaz à la bonne température en entrée de stack oblige donc à faire des enroulements d'une longueur d'environ 3 m, ce qui entraîne l'inconvénient de rajouter de la complexité dans les cintrages pour faire en sorte que les tubes arrivent aux bons endroits dans un espace confiné, et ce qui augmente de façon importante la taille du four. La mise en œuvre est donc compliquée car il faut être précis et car les tubes, typiquement de diamètre 10/12 en inox 316L ou Inconel 600, sont très rigides. Par ailleurs, le fait de faire des boucles de surchauffe de gaz prend beaucoup de place, et interfère immanquablement avec les amenées de courant, les passages de thermocouples, et les tubes de sortie de l'électrolyseur, ce qui amène souvent à raccourcir ces lignes du fait du manque de place dans le four. De plus, il faut refaire le même travail de cintrage à chaque nouveau stack, car le démontage du raccordement de ces boucles est destructif.

En règle générale, pour obtenir la bonne température en entrée de stack 20, et pour un diamètre intérieur de tube 12 d'environ 10 mm, il faut une longueur développée d'environ 3 m par lignes de gaz en entrée, typiquement H₂O et N₂O₂, avec un débit compris entre 5 et 15 Nm³/s. Cette longueur d'environ 3 m, qui permet de gagner environ 300°C, fonctionne aussi bien en mode d'empilement d'électrolyse à haute température (SOEC) ou de pile à combustible (SOFC), et garantit la bonne température en entrée de stack.

En outre, il est nécessaire de faire un traitement coûteux et long de ces lignes de gaz par dépôt d'alumine afin d'éviter les pollutions dues à l'oxydation lorsque de l'inox 316L est utilisé. Ces particules (chrome, vanadium, ...) peuvent venir se fixer sur cette cellule, et ainsi diminuer les performances de l'empilement à oxydes solides de type SOEC/SOFC.

Par ailleurs, la deuxième technique nécessite un surchauffeur 30 par entrées de gaz. Or, ce sont des ensembles massifs qui prennent beaucoup de place alors que l'on tend de plus en plus à aller vers des systèmes compacts. Il y a donc autant de surchauffeurs électriques que d'entrées de gaz, ce qui, dans le cadre de l'intégration des éléments périphériques dans un four, pose de sérieux problèmes. Il y a donc une nécessité de placer la sortie de gaz de ce chauffeur électrique 30 au plus proche des entrées du stack afin d'éviter un traçage de la ligne par bras chauffant.

### EXPOSÉ DE L'INVENTION

L'invention a pour but de remédier au moins partiellement aux besoins mentionnés précédemment et aux inconvénients relatifs aux réalisations de l'art antérieur.

Elle vise notamment la réalisation d'une conception d'un ensemble intégré empilement (ou stack)/système de surchauffe des gaz pour un empilement d'électrolyse à haute température (SOEC) ou de pile à combustible (SOFC), et plus spécifiquement à réaliser, au cœur même de l'empilement, en partie chaude, un système compact de surchauffe des gaz d'entrée de l'empilement, sans rajouter d'épaisseur. Ce système doit donc pouvoir être intégré à l'empilement présentant un caractère de type « Plug & Play »

(PnP), soit de type « branche et utilise », comme décrit dans la demande de brevet français FR 3 045 215 A1.

L'invention a ainsi pour objet, selon l'un de ses aspects, un ensemble, comportant :
- un empilement à oxydes solides de type SOEC/SOFC fonctionnant à haute température, comportant :
   - une pluralité de cellules électrochimiques formées chacune d'une cathode, d'une anode et d'un électrolyte intercalé entre la cathode et l'anode, et une pluralité d'interconnecteurs intermédiaires agencés chacun entre deux cellules électrochimiques adjacentes,
   - une plaque terminale supérieure et une plaque terminale inférieure, entre lesquelles la pluralité de cellules électrochimiques et la pluralité d'interconnecteurs intermédiaires sont enserrées,
- un système de serrage de l'empilement à oxydes solides de type SOEC/SOFC, comportant une plaque de serrage supérieure et une plaque de serrage inférieure, entre lesquelles l'empilement à oxydes solides de type SOEC/SOFC est enserré,
caractérisé en ce qu'il comporte en outre :
- un système de surchauffe des gaz en entrée de l'empilement à oxydes solides de type SOEC/SOFC, comportant :
   - au moins une plaque chauffante intégrée dans l'épaisseur d'au moins l'une des plaques de serrage supérieure et inférieure permettant le chauffage des gaz à réchauffer,
   - au moins une plaque terminale supérieure de surchauffe des gaz, positionnée entre la plaque de serrage supérieure et l'empilement à oxydes solides de type SOEC/SOFC, et/ou une plaque terminale inférieure de surchauffe des gaz, positionnée entre la plaque de serrage inférieure et l'empilement à oxydes solides de type SOEC/SOFC, chaque plaque terminale de surchauffe des gaz comportant un circuit de circulation des gaz depuis une première extrémité, au niveau de laquelle parviennent les gaz à réchauffer, vers une deuxième extrémité, au niveau de laquelle s'échappent les gaz réchauffés vers l'empilement,
- au moins un conduit d'entrée des gaz à réchauffer communiquant avec la première extrémité d'une plaque terminale de surchauffe des gaz, de sorte qu'un flux de gaz à réchauffer entrant dans ledit au moins un conduit d'entrée circule dans le circuit de circulation des gaz, depuis la première extrémité vers la deuxième extrémité pour atteindre l'entrée de l'empilement à oxydes solides de type SOEC/SOFC.

Grâce à l'invention, il est possible de s'affranchir des enroulements tubulaires compliqués à mettre en œuvre, tels que décrits précédemment en lien avec la première technique de surchauffe des gaz, par le biais d'une géométrie innovante et compacte par rapport à près de 2 mètres, voire 3,6 mètres, de tubes cintrés dans l'enceinte du four par ligne de gaz. On obtient donc un gain significatif en termes d'encombrement. C'est une intégration dans l'empilement car il n'y a pas de pièce rajoutée en plus.

De plus, le système de surchauffe selon l'invention faisant partie du stack, il est possible d'éviter de refaire les enroulements tubulaires à chaque nouveau stack alors que le système de boucles tubulaires selon la première technique de l'art antérieur n'est pas récupérable.

Avantageusement, le système de surchauffe selon l'invention peut être réutilisé pour d'autres empilements.

En outre, il peut être aisé de mettre des thermocouples en sortie du système de surchauffe selon l'invention pour connaître avec exactitude la température d'entrée des gaz dans l'empilement ou stack, alors que pour les tubes selon l'art antérieur, c'est plus compliqué du fait du manque de place et des géométries courbes des enroulements.

Par ailleurs, le chemin du gaz au sein du système de surchauffe selon l'invention est facilité par la géométrie sinusoïdale permettant une bonne continuité dans le flux de gaz entrant tout en limitant les pertes de charge.

De plus, l'éventuel traitement par dépôt d'alumine n'est à réaliser qu'une seule fois à l'intérieur du système de surchauffe pour éviter les pollutions par évaporation de chrome et d'autres éléments.

Le système de surchauffe selon l'invention peut en outre comporter l'une ou plusieurs des caractéristiques suivantes prises isolément ou suivant toutes combinaisons techniques possibles.

De façon préférentielle, ladite au moins une plaque chauffante comporte une résistance. Le courant électrique peut alors circuler dans la résistance et chauffer celle-ci par effet Joule. Cette chaleur peut être modulée en faisant varier l'intensité du courant électrique. Un thermostat peut être utilisé pour la régulation de chaleur et de courant électrique de façon à conserver une température proche de celle souhaitée.

La résistance peut notamment être réalisée en un alliage nickel-chrome, tout particulièrement très résistif. La résistance peut présenter une forme spiralée.

Ainsi, ladite au moins une plaque chauffante peut comporter une plaque support dans laquelle une résistance est intégrée. Cet ensemble formé par la plaque support et la résistance intégrée à la plaque support peut ainsi correspondre à une plaque chauffante qui est intégrée dans l'épaisseur d'au moins l'une des plaques de serrage supérieure et inférieure. L'empreinte de la résistance sur la plaque support peut être réalisée par usinage. La chaleur de la résistance est transmise à la plaque support. Cette plaque support peut par exemple être réalisée en fonte ou en divers autres matériaux.

En variante, ladite au moins une plaque chauffante peut être constituée par une résistance intégrée dans l'épaisseur d'au moins l'une des plaques de serrage supérieure et inférieure. Autrement dit, à l'inverse de la configuration précédente, ladite au moins une plaque chauffante peut être dépourvue de plaque support dans laquelle une résistance est intégrée et être uniquement constituée par une résistance. Dans ce cas, l'intégration d'une plaque chauffante sous forme de résistance dans une plaque de serrage peut être réalisée par brasage. La ou les plaques de serrage associées peuvent être par exemple réalisées en un alliage de type inox 310S. Alors, le matériau de la plaque de serrage peut absorber la chaleur de la résistance et la diffuser vers les objets environnants.

En variante encore, au lieu d'une résistance, ladite au moins une plaque chauffante pourrait comporter une ou plusieurs cartouches chauffantes insérées dans un ou plusieurs orifices d'une plaque support intégrée à une plaque de serrage ou un ou plusieurs orifices formés dans la plaque de serrage, sans utilisation de plaque support. Pour en faciliter l'installation, ces cartouches chauffantes auraient une taille légèrement inférieure à leur diamètre nominal.

Par ailleurs, la ou les plaques de serrage, inférieures et/ou supérieures, peuvent être réalisées en un acier inoxydable chrome-nickel austénitique, en particulier en un acier austénitique de type AISI 310, avec une résistance élevée aux hautes températures. En variante encore, elles pourraient être réalisées en un alliage nickel-chrome, notamment de type Inconel 600, avec une bonne résistance à l'oxydation et aux hautes températures.

Le circuit de circulation des gaz peut préférentiellement s'étendre sous une forme sinusoïdale, ou en serpentin, depuis la première extrémité vers la deuxième extrémité, l'amplitude des ondes sinusoïdales étant régulière ou non. En variante, d'autres formes sont possibles.

Selon un premier mode de réalisation de l'invention, ladite au moins une plaque terminale supérieure de surchauffe des gaz et/ou ladite au moins une plaque terminale inférieure de surchauffe des gaz peuvent être respectivement positionnées entre la plaque de serrage supérieure et la plaque terminale supérieure, et entre la plaque de serrage inférieure et la plaque terminale inférieure.

En particulier, la ou les plaques terminales de surchauffe des gaz peuvent être positionnées entre deux plaques d'isolation électrique, notamment réalisées en mica.

Selon un deuxième mode de réalisation de l'invention, ladite au moins une plaque terminale supérieure de surchauffe des gaz et/ou ladite au moins une plaque terminale inférieure de surchauffe des gaz peuvent être respectivement formées par la plaque terminale supérieure et la plaque terminale inférieure, lesquelles comporte un circuit de circulation des gaz depuis une première extrémité, au niveau de laquelle parviennent les gaz à réchauffer, vers une deuxième extrémité, au niveau de laquelle s'échappent les gaz réchauffés vers l'empilement.

Chaque système de surchauffe des gaz peut alors comporter au moins une tôle de fermeture, notamment deux tôles de fermeture de part et d'autre de la plaque terminale supérieure de surchauffe des gaz et/ou de la plaque terminale inférieure de surchauffe des gaz, pour fermer le circuit de circulation des gaz.

Préférentiellement, ladite au moins une tôle de fermeture peut être réalisée dans le même métal que la plaque terminale supérieure de surchauffe des gaz et/ou la plaque terminale inférieure de surchauffe des gaz, mais les métaux utilisés peuvent être aussi différents.

Par exemple, ladite au moins une tôle de fermeture et/ou la plaque terminale supérieure de surchauffe des gaz et/ou la plaque terminale inférieure de surchauffe des gaz peuvent être réalisées en un alliage de fer-chrome, par exemple en un alliage de type Crofer® 22 APU, en acier Inconel 600, en inox 310S, entre autres. Ladite au moins au moins une tôle de fermeture peut par exemple être en inox 310S et la plaque terminale supérieure de surchauffe des gaz et/ou la plaque terminale inférieure de surchauffe des gaz peuvent être en Inconel 600.

En outre, la plaque terminale supérieure de surchauffe des gaz et/ou la plaque terminale inférieure de surchauffe des gaz pourraient être fabriquées par fabrication additive. Dans ce cas, ladite au moins une tôle de fermeture pourrait ne pas être présente.

Par ailleurs, le système de surchauffe des gaz peut en outre comporter au moins un conduit de sortie de récupération des gaz en sortie de l'empilement à oxydes solides de type SOEC/SOFC.

De plus, chaque plaque de serrage du système de serrage peut comporter au moins un orifice de serrage, le système de serrage comportant en outre :
- au moins une tige de serrage destinée à s'étendre au travers d'un orifice de serrage de la plaque de serrage supérieure et au travers d'un orifice de serrage correspondant de la plaque de serrage inférieure pour permettre l'assemblage entre elles des plaques de serrage supérieure et inférieure,
- des moyens de serrage au niveau de chaque orifice de serrage des plaques de serrage supérieure et inférieure destinés à coopérer avec ladite au moins une tige de serrage pour permettre l'assemblage entre elles des plaques de serrage supérieure et inférieure,
- éventuellement au moins une plaque d'isolation électrique destinée à être située entre l'empilement à oxydes solides de type SOEC/SOFC et au moins l'une des plaques de serrage supérieure et inférieure.

Par ailleurs, l'invention a également pour objet, selon un autre de ses aspects, un procédé de fabrication d'au moins un système de surchauffe des gaz en entrée d'un empilement à oxydes solides de type SOEC/SOFC d'un ensemble tel que défini précédemment, caractérisé en ce qu'il comporte l'étape d'usinage d'une plaque terminale de surchauffe des gaz inférieure et/ou d'une plaque terminale de surchauffe des gaz supérieure pour former un circuit de circulation des gaz.

Le procédé peut de plus comporter l'étape consistant à rapporter, par un procédé de soudage au laser par transparence, une plaque de fermeture sur le circuit de circulation de la plaque terminale de surchauffe des gaz inférieure et/ou de la plaque terminale de surchauffe des gaz supérieure, notamment deux plaques de fermeture de part et d'autre de la plaque terminale de surchauffe des gaz inférieure et/ou de la plaque terminale de surchauffe des gaz supérieure.

L'ensemble et le procédé de fabrication selon l'invention peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
- la figure 1 est une vue schématique montrant le principe de fonctionnement d'un électrolyseur à oxydes solides à haute température (SOEC),
- la figure 2 est une vue schématique éclatée d'une partie d'un électrolyseur à oxydes solides à haute température (SOEC) comprenant des interconnecteurs selon l'art antérieur,
- la figure 3 illustre le principe de l'architecture d'un four sur lequel un empilement d'électrolyse à haute température (SOEC) ou de pile à combustible (SOFC) fonctionnant à haute température est placé,
- la figure 4 illustre le principe d'un chauffeur électrique de gaz selon l'art antérieur,
- la figure 5 représente, en perspective, un premier exemple d'un ensemble conforme à l'invention comprenant un empilement à oxydes solides de type SOEC/SOFC et un système de serrage de l'empilement, comprenant en outre deux systèmes de surchauffe des gaz, respectivement en position supérieure et en position inférieure, avec la plaque terminale de surchauffe des gaz de chaque système prise entre la plaque terminale de stack et la plaque de serrage,
- la figure 6 représente, en perspective, un deuxième exemple d'un ensemble conforme à l'invention comprenant un empilement à oxydes solides de type SOEC/SOFC et un système de serrage de l'empilement, comprenant en outre deux systèmes de surchauffe des gaz, respectivement en position supérieure et en position inférieure, avec la plaque terminale de surchauffe des gaz de chaque système intégrée dans le concept de la plaque terminale de stack,
- les figures 7 et 8 sont des vues en coupe et en perspective partielles du deuxième exemple d'ensemble de la figure 6, sans la présence du stack,
- la figure 9 représente, en perspective, un exemple de plaque terminale de surchauffe des gaz d'un ensemble conforme à l'invention, pouvant être distincte de la plaque terminale de stack comme selon l'exemple de la figure 5 ou être intégrée à la plaque terminale de stack comme selon l'exemple de la figure 6, et
- la figure 10 représente la plaque terminale de surchauffe des gaz de la figure 9 avec présence d'une tôle de fermeture rapportée par soudure laser.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

Les figures 1 à 4 ont déjà été décrites précédemment dans la partie relative à l'état de la technique antérieure et au contexte technique de l'invention. Il est précisé que, pour les figures 1 et 2, les symboles et les flèches d'alimentation de vapeur d'eau H₂O, de distribution et de récupération de dihydrogène H₂, d'oxygène O₂, d'air et du courant électrique, sont montrés à des fins de clarté et de précision, pour illustrer le fonctionnement des dispositifs représentés.

En outre, il faut noter que tous les constituants (anode/électrolyte/cathode) d'une cellule électrochimique donnée sont préférentiellement des céramiques. La température de fonctionnement d'un empilement de type SOEC/SOFC haute température est par ailleurs typiquement comprise entre 600 et 1000°C.

De plus, les termes éventuels « supérieur » et « inférieur » sont à comprendre ici selon le sens d'orientation normal d'un empilement de type SOEC/SOFC lorsque dans sa configuration d'utilisation.

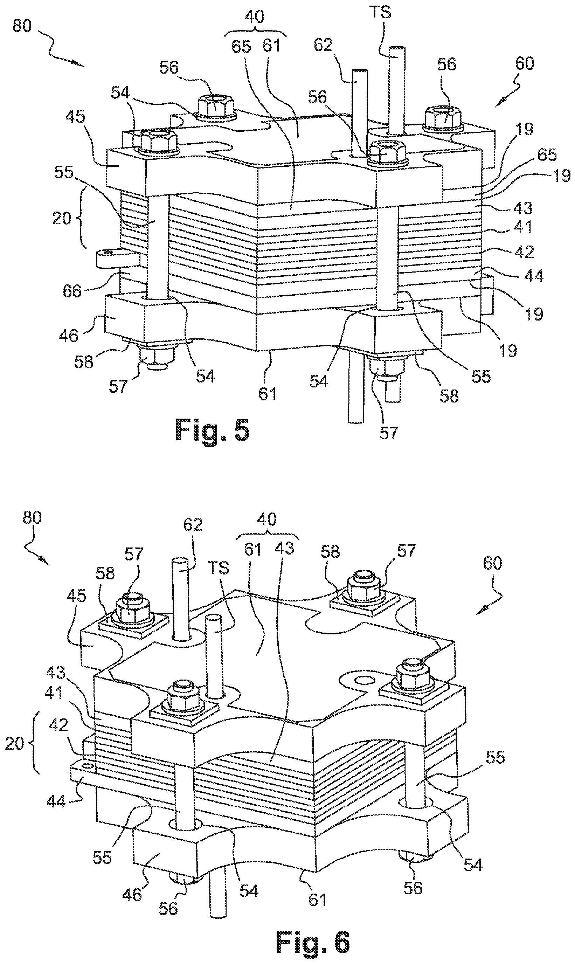

En référence à la figure 5, on a illustré un premier exemple d'ensemble 80 comprenant un empilement 20 à oxydes solides de type SOEC/SOFC conforme à l'invention et un système de serrage 60, comprenant en outre deux systèmes de surchauffe 40 des gaz, respectivement en position supérieure et en position inférieure, avec la plaque terminale de surchauffe des gaz 65, 66 de chaque système prise entre la plaque terminale de stack 43, 44 et la plaque de serrage 45, 46.

Par ailleurs, en référence aux figures 6, 7 et 8, on a illustré un deuxième exemple d'ensemble 80 comprenant un empilement 20 à oxydes solides de type SOEC/SOFC conforme à l'invention et un système de serrage 60, comprenant en outre deux systèmes de surchauffe 40 des gaz, respectivement en position supérieure et en position inférieure, avec la plaque terminale de surchauffe des gaz 43, 44 correspondant à la plaque terminale de stack 43, 44.

Autrement dit, il est donc possible de mettre en œuvre l'invention selon ces deux modes de réalisation : le premier, dans lequel la plaque terminale de surchauffe des gaz 65, 66 est plaquée entre une plaque de serrage 45, 46 et une plaque terminale de stack 43, 44; le deuxième, dans lequel la plaque terminale de surchauffe des gaz correspond directement à une plaque terminale de stack 43, 44, le circuit de circulation des gaz, circuit monocanal, étant intégré dans cette plaque terminale de stack 43, 44.

Chaque système de surchauffe 40 permet de réaliser un chauffage des gaz en entrée de l'empilement 20 de type SOEC/SOFC associé à un four 10, comme décrit précédemment en référence à la figure 3.

Parmi les différents modes de transfert de chaleur dans la zone du four 10, le mode prépondérant à ces niveaux de température, soit entre 650 et 800°C, correspond à des échanges radiatifs par rayonnement. L'autre mode de transfert est alors la conduction thermique, et c'est celui que l'invention met en œuvre car il a l'avantage de créer moins de pertes thermiques vers l'extérieur. Il s'agit du mode de transfert de chaleur provoqué par une différence de température entre deux régions d'un même milieu ou entre deux milieux en contact sans déplacement appréciable de matière. L'utilisation de plaques chauffantes 61, comme décrit par la suite, pour les systèmes de surchauffe 40 permet de récupérer la conduction thermique et d'élever les gaz à la bonne température. Ainsi, les gaz circulant dans le circuit de circulation des gaz sont réchauffés au moyen d'une plaque chauffante 61 par conduction thermique.

De façon avantageuse, l'ensemble 80 selon l'invention présente une structure semblable à celle de l'ensemble décrit dans la demande de brevet français FR 3 045 215 A1, hormis la présence ici d'un système de surchauffe des gaz, c'est-à-dire que l'empilement 20 présente un caractère de type « Plug & Play » (PnP).

Aussi, de façon commune aux deux modes de réalisation de l'invention, et comme visible sur les figures 5 à 8, chaque ensemble 80 comporte un empilement 20 à oxydes solides de type SOEC/SOFC fonctionnant à haute température.

Cet empilement 20 comporte une pluralité de cellules électrochimiques 41 formées chacune d'une cathode, d'une anode et d'un électrolyte intercalé entre la cathode et l'anode, et une pluralité d'interconnecteurs intermédiaires 42 agencés chacun entre deux cellules électrochimiques 41 adjacentes. Cet ensemble de cellules électrochimiques 41 et d'interconnecteurs intermédiaires 42 peut également être désigné par « stack ».

De plus, l'empilement 20 comporte une plaque terminale supérieure 43 et une plaque terminale inférieure 44, respectivement également dénommées plaque terminale de stack supérieure 43 et plaque terminale de stack inférieure 44, entre lesquelles la pluralité de cellules électrochimiques 41 et la pluralité d'interconnecteurs intermédiaires 42 sont enserrées, soit entre lesquelles se trouve le stack.

Par ailleurs, l'ensemble 80 comporte aussi un système de serrage 60 de l'empilement 20 à oxydes solides de type SOEC/SOFC, comportant une plaque de serrage supérieure 45 et une plaque de serrage inférieure 46, entre lesquelles l'empilement 20 à oxydes solides de type SOEC/SOFC est enserré.

Chaque plaque de serrage 45, 46 du système de serrage 60 comporte quatre orifices de serrage 54.

De plus, le système de serrage 60 comporte en outre quatre tiges de serrage 55 s'étendant au travers d'un orifice de serrage 54 de la plaque de serrage supérieure 45 et au travers d'un orifice de serrage 54 correspondant de la plaque de serrage inférieure 46 pour permettre l'assemblage entre elles des plaques de serrage supérieure 45 et inférieure 46.

Le système de serrage 60 comporte de plus des moyens de serrage 56, 57, 58 au niveau de chaque orifice de serrage 54 des plaques de serrage supérieure 45 et inférieure 46 coopérant avec les tiges de serrage 55 pour permettre l'assemblage entre elles des plaques de serrage supérieure 45 et inférieure 46.

Plus précisément, les moyens de serrage comportent, au niveau de chaque orifice de serrage 54 de la plaque de serrage supérieure 45, un premier écrou de serrage 56 coopérant avec la tige de serrage 55 correspondante insérée au travers de l'orifice de serrage 54. De plus, les moyens de serrage comportent, au niveau de chaque orifice de serrage 54 de la plaque de serrage inférieure 46, un deuxième écrou de serrage 57 associé à une rondelle de serrage 58, ceux-ci coopérant avec la tige de serrage 55 correspondante insérée au travers de l'orifice de serrage 54. La rondelle de serrage 58 est située entre le deuxième écrou de serrage 57 et la plaque de serrage inférieure 46.

Par ailleurs, conformément à l'invention, l'ensemble 80 comporte en outre un système de surchauffe 40 des gaz GS supérieur et un système de surchauffe des gaz GS inférieur en entrée de l'empilement 20 à oxydes solides de type SOEC/SOFC.

Chaque système de surchauffe 40 supérieur ou inférieur comporte une plaque chauffante 61 intégrée dans l'épaisseur de la plaque de serrage supérieure 45 ou inférieure 46 de sorte à permettre le chauffage des gaz à réchauffer GE.

De plus, chaque système de surchauffe 40 supérieur ou inférieur comporte une plaque terminale supérieure ou inférieure de surchauffe des gaz. La plaque terminale supérieure de surchauffe des gaz 65, 43 est positionnée entre la plaque de serrage supérieure 45 et l'empilement 20 à oxydes solides de type SOEC/SOFC, la plaque inférieure de surchauffe des gaz 66, 44 est positionnée entre la plaque de serrage inférieure 46 et l'empilement 20 à oxydes solides de type SOEC/SOFC.

Plus précisément, en référence à la figure 5, le premier mode de réalisation prévoit que la plaque terminale de surchauffe des gaz 65, 66 est indépendante de la plaque terminale de stack 43, 44.

Ainsi, la plaque terminale supérieure de surchauffe des gaz 65 est située entre la plaque de serrage supérieure 45 et la plaque terminale supérieure de stack 43. De même, la plaque terminale inférieure de surchauffe des gaz 66 est située entre la plaque de serrage inférieure 46 et la plaque terminale inférieure de stack 44.

De façon avantageuse, chaque plaque terminale de surchauffe des gaz 65, 66 est prise entre deux plaques d'isolation électrique 59, réalisées en mica. Ces plaques d'isolation électrique 59 jouent le rôle de cales d'isolation électrique. En l'absence de celles-ci, le système de serrage étant préférentiellement métallique, il provoquerait un court-circuit global entre le haut et le bas de l'empilement 20.

Par contre, en référence aux figures 6 à 8, le deuxième mode de réalisation prévoit que la plaque terminale de surchauffe des gaz correspond à la plaque terminale de stack 43, 44. Autrement dit, le circuit de circulation C des gaz est formé dans la plaque terminale de stack 43, 44 habituelle.

Ce type de plaque terminale de stack 43, 44 a classiquement deux fonctions : prendre le stack en « sandwich » ; réceptionner les conduits d'entrée/sortie du stack, ainsi que les thermocouples, surtout au niveau de la plaque terminale de stack inférieure 44.

Ainsi, le deuxième mode de réalisation de l'invention lui rajoute la fonction d'utilisation de cette plaque pour le surchauffage des gaz en entrée de stack.

Il est à noter que chaque plaque terminale de stack 43, 44 et/ou chaque plaque terminale de surchauffe des gaz 65, 66 peut être réalisée par exemple en acier inoxydable ferritique haute température, tel que le Crofer® 22 APU.

Dans les deux modes de réalisation, respectivement selon la figure 5 et selon les figures 6 à 8, la plaque terminale de surchauffe des gaz supérieure 43 ou 65 est identique à la plaque terminale de surchauffe des gaz inférieure 44 ou 66. Toutefois, il pourrait en être autrement. La géométrie des plaques peut être modifiée en fonction des besoins mais leur principe de fonctionnement reste identique.

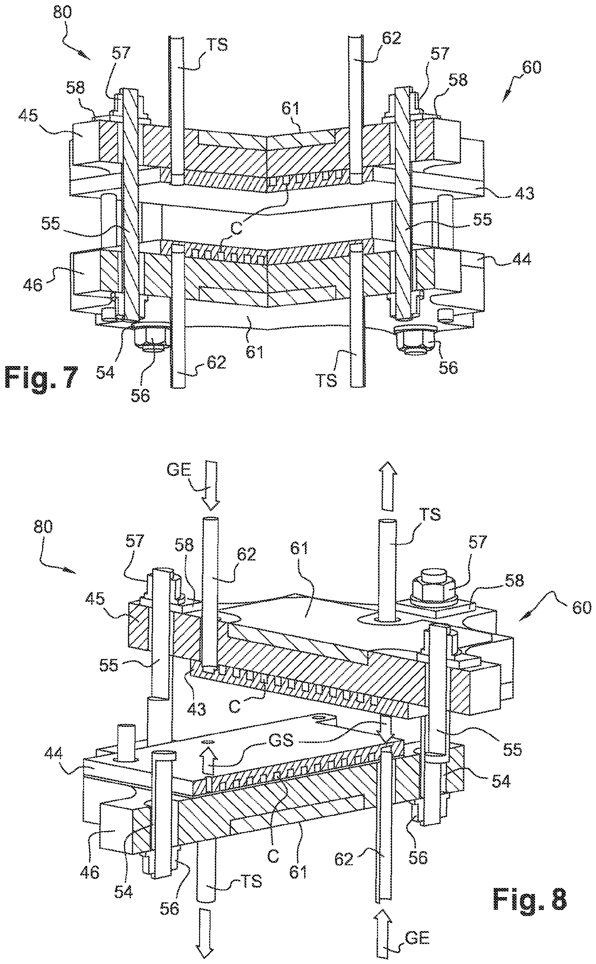

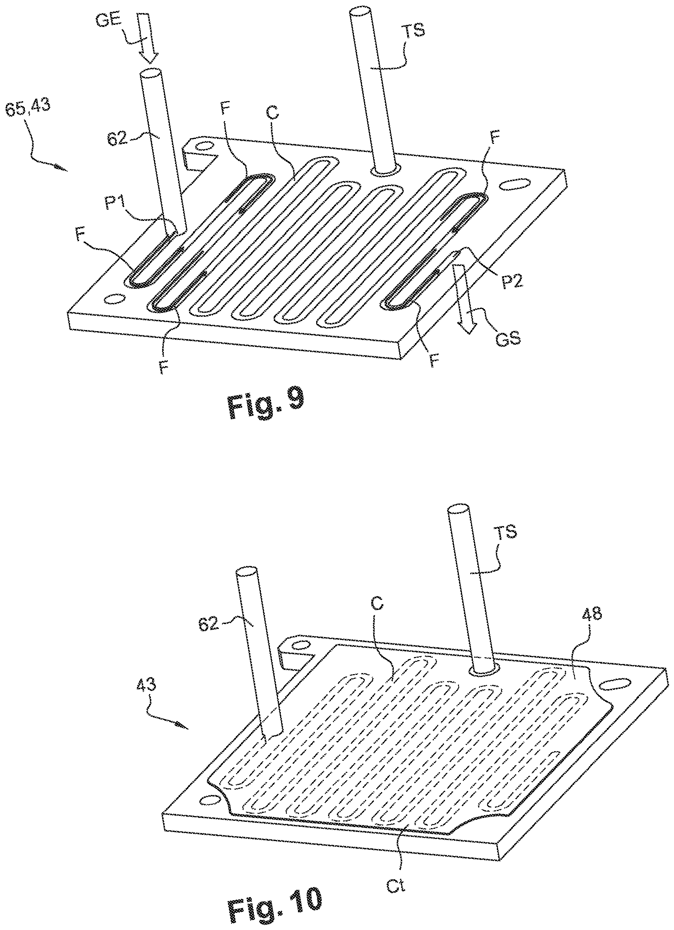

Ainsi, comme visible notamment sur les figures 8 et 9, les gaz à réchauffer GE pénètrent dans un conduit d'entrée 62 et parviennent à la première extrémité P1 d'un circuit de circulation des gaz C monocanal de la plaque terminale de surchauffe des gaz 65, 43. La figure 9 représente la plaque terminale de surchauffe des gaz supérieure 65 ou 43 mais le principe est le même pour la plaque terminale de surchauffe des gaz inférieure 66 ou 44.

Une fois au niveau de la première extrémité P1, les gaz suivent le chemin de forme sinusoïdal, ou en serpentin, du circuit de circulation C comme selon les flèches F représentées sur la figure 9 jusqu'à parvenir à la deuxième extrémité P2 au niveau de laquelle les gaz réchauffés GS, par le biais de la plaque chauffante 61, s'échappent vers l'empilement 20. La longueur totale parcourue par les gaz dans le circuit de circulation C, autrement dit la longueur entre les première P1 et deuxième P2 extrémités, est par exemple de l'ordre de 2 m. A titre d'exemple, la perte de charge calculée par rapport à cette configuration est de l'ordre de 81 mbar pour un canal de 5 mm x 5 mm sur une longueur de 2 m.

De façon générale, la longueur du circuit de circulation des gaz, soit la longueur totale parcourue par les gaz dans le circuit de circulation C, entre les première P1 et deuxième P2 extrémités, peut être déterminée en fonction de la nature et de la vitesse du gaz qui circule à l'intérieur, ainsi que de la température interne du tube. Cette longueur peut par exemple être plus généralement comprise entre 2 et 3 m, indépendamment du mode de réalisation décrit.

La forme globale du circuit de circulation C, c'est-à-dire la forme globale de l'enveloppe dans laquelle le circuit de circulation C est contenu, peut être de tout type, étant par exemple carrée, arrondie ou encore rectangulaire comme c'est le cas pour l'exemple de la figure 9 avec une plaque terminale de surchauffe des gaz supérieure 43 ou 65 également de forme rectangulaire.

Le circuit de circulation C peut être obtenu par usinage, par exemple par le biais d'une fraiseuse à commande numérique ou de tout autre système d'usinage approprié afin d'obtenir la géométrie désirée. Dans tous les cas, la section du monocanal formant le circuit de circulation C et sa longueur doivent être optimisées pour surchauffer correctement les gaz tout en minimisant les pertes de charge.

Par ailleurs, comme visible sur les figures 8 et 9 notamment, chaque système de surchauffe 40 des gaz GS comporte un conduit de sortie TS de récupération des gaz en sortie de l'empilement 20 à oxydes solides de type SOEC/SOFC, traversant la plaque terminale de surchauffe des gaz correspondante.

En outre, dans le premier mode de réalisation de l'invention selon l'exemple de la figure 5, aucune fermeture des plaques terminales de surchauffe des gaz supérieure 65 et inférieure 66 n'est nécessaire car deux plaques d'isolation électrique 19, réalisées en mica, sont positionnées de part et d'autre de chaque plaque terminale de surchauffe des gaz 65 et 66, à savoir une plaque pour la fermeture des canaux de la plaque terminale de stack haute et basse, et l'autre plaque pour l'isolation électrique.

Le mica des plaques d'isolation électrique 19 est traditionnellement utilisé comme isolant électrique et thermique. Les plaques d'isolation thermique 19 peuvent préférentiellement présenter une couche en mica de faible épaisseur, notamment de l'ordre de 0,8 mm. Dans ce cas, le mica peut permettre d'isoler électriquement le stack, sans pour autant former une barrière à la transmission de chaleur.

En revanche, dans le deuxième mode de réalisation de l'invention selon l'exemple des figures 6 à 8, chaque système de surchauffe 40 comporte au moins une tôle de fermeture 48 notamment deux tôles de fermeture 48 de part et d'autre de la plaque terminale de surchauffe des gaz 43 ou 44, pour fermer le circuit de circulation C, comme visible sur la figure 10.

La ou les tôles de fermeture 48 sont préférentiellement rapportées soudées laser par transparence. La technique du soudage au laser permet le soudage de métaux par les caractéristiques de la technologie laser : avec la haute densité d'énergie et de finesse du faisceau laser, les zones ciblées entrent en fusion puis sont rapidement soudées par refroidissement. Il en résulte une soudure solide sur une surface réduite.

Comme illustré sur la figure 10, la soudure laser par transparence doit préférentiellement suivre le contour Ct, ou trait de fermeture laser, tel que représenté pour pouvoir forcer les gaz à suivre le chemin complet.

Dans cet exemple des figures 6 à 8, des plaques d'isolation électrique peuvent également être prévues pour imposer les polarités.

Bien entendu, l'invention n'est pas limitée aux exemples de réalisation qui viennent d'être décrits. Diverses modifications peuvent y être apportées par l'homme du métier.

## Revendications

1. Ensemble (80), comportant :
- un empilement (20) à oxydes solides de type SOEC/SOFC fonctionnant à haute température, comportant :
- une pluralité de cellules électrochimiques (41) formées chacune d'une cathode, d'une anode et d'un électrolyte intercalé entre la cathode et l'anode, et une pluralité d'interconnecteurs intermédiaires (42) agencés chacun entre deux cellules électrochimiques (41) adjacentes,
- une plaque terminale supérieure (43) et une plaque terminale inférieure (44), entre lesquelles la pluralité de cellules électrochimiques (41) et la pluralité d'interconnecteurs intermédiaires (42) sont enserrées,
- un système de serrage (60) de l'empilement (20) à oxydes solides de type SOEC/SOFC, comportant une plaque de serrage supérieure (45) et une plaque de serrage inférieure (46), entre lesquelles l'empilement (20) à oxydes solides de type SOEC/SOFC est enserré,
**caractérisé en ce qu'**il comporte en outre :
- un système de surchauffe (40) des gaz (GS) en entrée de l'empilement (20) à oxydes solides de type SOEC/SOFC, comportant :
- au moins une plaque chauffante (61) intégrée dans l'épaisseur d'au moins l'une des plaques de serrage supérieure (45) et inférieure (46) permettant le chauffage des gaz à réchauffer (GE),
- au moins une plaque terminale supérieure de surchauffe des gaz (65, 43), positionnée entre la plaque de serrage supérieure (45) et l'empilement (20) à oxydes solides de type SOEC/SOFC, et/ou une plaque terminale inférieure de surchauffe des gaz (66, 44), positionnée entre la plaque de serrage inférieure (46) et l'empilement (20) à oxydes solides de type SOEC/SOFC, chaque plaque terminale de surchauffe des gaz (65, 43, 66, 44) comportant un circuit de circulation des gaz (C) depuis une première extrémité (P1), au niveau de laquelle parviennent les gaz à réchauffer (GE), vers une deuxième extrémité (P2), au niveau de laquelle s'échappent les gaz réchauffés (GS) vers l'empilement (20),
- au moins un conduit d'entrée (62) des gaz à réchauffer (GE) communiquant avec la première extrémité (P1) d'une plaque terminale de surchauffe des gaz (65, 43, 66, 44), de sorte qu'un flux de gaz à réchauffer (GE) entrant dans ledit au moins un conduit d'entrée (62) circule dans le circuit de circulation des gaz (C), depuis la première extrémité (P1) vers la deuxième extrémité (P2) pour atteindre l'entrée de l'empilement (20) à oxydes solides de type SOEC/SOFC.

2. Ensemble selon la revendication 1, **caractérisé en ce que** le circuit de circulation des gaz (C) s'étend sous une forme sinusoïdale depuis la première extrémité (P1) vers la deuxième extrémité (P2).

3. Ensemble selon la revendication 1 ou 2, **caractérisé en ce que** ladite au moins une plaque terminale supérieure de surchauffe des gaz (65) et/ou ladite au moins une plaque terminale inférieure de surchauffe des gaz (66) sont respectivement positionnées entre la plaque de serrage supérieure (45) et la plaque terminale supérieure (43), et entre la plaque de serrage inférieure (46) et la plaque terminale inférieure (44).

4. Ensemble selon la revendication 3, **caractérisé en ce que** la ou les plaques terminales de surchauffe des gaz (65, 66) sont positionnées entre deux plaques d'isolation électrique (59), notamment réalisées en mica.

5. Ensemble selon la revendication 1 ou 2, **caractérisé en ce que** ladite au moins une plaque terminale supérieure de surchauffe des gaz (43) et/ou ladite au moins une plaque terminale inférieure de surchauffe des gaz (44) sont respectivement formées par la plaque terminale supérieure (43) et la plaque terminale inférieure (44), lesquelles comporte un circuit de circulation des gaz (C) depuis une première extrémité (P1), au niveau de laquelle parviennent les gaz à réchauffer (GE), vers une deuxième extrémité (P2), au niveau de laquelle s'échappent les gaz réchauffés (GS) vers l'empilement (20).

6. Ensemble selon la revendication 5, **caractérisé en ce que** chaque système de surchauffe des gaz (40) comporte au moins une tôle de fermeture (48), notamment deux tôles de fermeture (48) de part et d'autre de la plaque terminale supérieure de surchauffe des gaz (43) et/ou de la plaque terminale inférieure de surchauffe des gaz (44), pour fermer le circuit de circulation des gaz (C).

7. Ensemble selon l'une quelconque des revendications précédentes, **caractérisé en ce que** le système de surchauffe (40) des gaz (GS) comporte en outre au moins un conduit de sortie (TS) de récupération des gaz en sortie de l'empilement (20) à oxydes solides de type SOEC/SOFC.

8. Ensemble selon l'une quelconque des revendications précédentes, **caractérisé en ce que** chaque plaque de serrage (45, 46) du système de serrage (60) comporte au moins un orifice de serrage (54), le système de serrage (60) comportant en outre :
- au moins une tige de serrage (55) destinée à s'étendre au travers d'un orifice de serrage (54) de la plaque de serrage supérieure (45) et au travers d'un orifice de serrage (54) correspondant de la plaque de serrage inférieure (46) pour permettre l'assemblage entre elles des plaques de serrage supérieure (45) et inférieure (46),
- des moyens de serrage (56, 57, 58) au niveau de chaque orifice de serrage (54) des plaques de serrage supérieure (45) et inférieure (46) destinés à coopérer avec ladite au moins une tige de serrage (55) pour permettre l'assemblage entre elles des plaques de serrage supérieure (45) et inférieure (46),
- éventuellement au moins une plaque d'isolation électrique (19) destinée à être située entre l'empilement (20) à oxydes solides de type SOEC/SOFC et au moins l'une des plaques de serrage supérieure (45) et inférieure (46).

9. Procédé de fabrication d'au moins un système de surchauffe (40) des gaz (GS) en entrée d'un empilement (20) à oxydes solides de type SOEC/SOFC d'un ensemble (80) selon l'une quelconque des revendications précédentes, **caractérisé en ce qu'**il comporte l'étape d'usinage d'une plaque terminale de surchauffe des gaz inférieure (44, 66) et/ou d'une plaque terminale de surchauffe des gaz supérieure (43, 65) pour former un circuit de circulation des gaz (C).

10. Procédé selon la revendication 9, **caractérisé en ce qu'**il comporte l'étape consistant à rapporter, par un procédé de soudage au laser par transparence, une plaque de fermeture (48) sur le circuit de circulation (C) de la plaque terminale de surchauffe des gaz inférieure (44, 66) et/ou de la plaque terminale de surchauffe des gaz supérieure (43, 65), notamment deux plaques de fermeture (48) de part et d'autre de la plaque terminale de surchauffe des gaz inférieure (44, 66) et/ou de la plaque terminale de surchauffe des gaz supérieure (43, 65).

## Patentansprüche

1. Anordnung (80), umfassend:
- einen Stapel (20) von Festoxyden vom Typ SOEC/SOFC, die bei Hochtemperatur arbeiten, umfassend:
- eine Mehrzahl von elektrochemischen Zellen (41), die jeweils aus einer Kathode, aus einer Anode und aus einem Elektrolyt gebildet sind, der zwischen der Kathode und der Anode eingefügt ist, und eine Mehrzahl von Zwischenverbindern (42), die jeweils zwischen zwei benachbarten elektrochemischen Zellen (41) angeordnet sind,
- eine obere Endplatte (43) und eine untere Endplatte (44), zwischen denen die Mehrzahl von elektrochemischen Zellen (41) und die Mehrzahl von Zwischenverbindern (42) eingespannt sind,
- ein System (60) zum Spannen des Stapels (20) von Festoxyden vom Typ SOEC/SOFC, umfassend eine obere Spannplatte (45) und eine untere Spannplatte (46), zwischen denen der Stapel (20) von Festoxyden vom Typ SOEC/SOFC eingespannt ist,
**dadurch gekennzeichnet, dass** sie ferner umfasst:
- ein System (40) zur Überhitzung der Gase (GS) am Eingang des Stapels (20) von Festoxyden vom Typ SOEC/SOFC, umfassend:
- wenigstens eine Heizplatte (61), die in die Dicke von wenigstens einer von der oberen (45) und der unteren (46) Spannplatte integriert ist, die das Heizen der zu erhitzenden Gase (GE) erlaubt,
- wenigstens eine obere Endplatte zur Überhitzung der Gase (65, 43), die zwischen der oberen Spannplatte (45) und dem Stapel (20) von Festoxyden vom Typ SOEC/SOFC positioniert ist, und/oder eine untere Endplatte zur Überhitzung der Gase (66, 44), die zwischen der unteren Spannplatte (46) und dem Stapel (20) von Festoxyden vom Typ SOEC/SOFC positioniert ist, wobei jede Endplatte zur Überhitzung der Gase (65, 43, 66, 44) einen Gaszirkulationskreis (C) ausgehend von einem ersten Ende (P1) umfasst, in dessen Bereich die zu erhitzenden Gase (GE) gelangen, in Richtung eines zweiten Endes (P2), in dessen Bereich die erhitzten Gase (GS) in Richtung des Stapels (20) austreten,
- wenigstens eine Eingangsleitung (62) für die zu erhitzenden Gase (GE), die mit dem ersten Ende (P1) einer Endplatte zur Überhitzung der Gase (65, 43, 66, 44) derart kommuniziert, dass ein Fluss von zu erhitzendem Gas (GE), der in die wenigstens eine Eingangsleitung (62) eintritt, in dem Gaszirkulationskreis (C) ausgehend von dem ersten Ende (P1) in Richtung des zweiten Endes (P2) zirkuliert, um den Eingang des Stapels (20) von Festoxyden vom Typ SOEC/SOFC zu erreichen.

2. Anordnung nach Anspruch 1, **dadurch gekennzeichnet, dass** sich der Gaszirkulationskreis (C) in einer Sinusform ausgehend vom ersten Ende (P1) in Richtung des zweiten Endes (P2) erstreckt.

3. Anordnung nach Anspruch 1 oder 2, **dadurch gekennzeichnet, dass** die wenigstens eine obere Endplatte zur Überhitzung der Gase (65) und/oder die wenigstens eine untere Endplatte zur Überhitzung der Gase (66) zwischen der oberen Spannplatte (45) und der oberen Endplatte (43) beziehungsweise zwischen der unteren Spannplatte (46) und der unteren Endplatte (44) positioniert sind.

4. Anordnung nach Anspruch 3, **dadurch gekennzeichnet, dass** die Endplatte(n) zur Überhitzung der Gase (65, 66) zwischen zwei elektrischen Isolationsplatten (59) positioniert sind, die insbesondere aus Glimmer hergestellt sind.

5. Anordnung nach Anspruch 1 oder 2, **dadurch gekennzeichnet, dass** die wenigstens eine obere Endplatte zur Überhitzung der Gase (43) und/oder die wenigstens eine untere Endplatte zur Überhitzung der Gase (44) durch die obere Endplatte (43) beziehungsweise die untere Endplatte (44) gebildet sind, die einen Gaszirkulationskreis (C) ausgehend von einem ersten Ende (P1), in dessen Bereich die zu erhitzenden Gase (GE) gelangen, in Richtung eines zweiten Endes (P2) umfasst, in dessen Bereich die erhitzten Gase (GS) in Richtung des Stapels (20) austreten.

6. Anordnung nach Anspruch 5, **dadurch gekennzeichnet, dass** jedes Gasüberhitzungssystem (40) wenigstens ein Schließblech (48) umfasst, insbesondere zwei Schließbleche (48) auf beiden Seiten der oberen Endplatte zur Überhitzung der Gase (43) und/oder der unteren Endplatte zur Überhitzung der Gase (44), um den Gaszirkulationskreis (C) zu schließen.

7. Anordnung nach einem der vorhergehenden Ansprüche, **dadurch gekennzeichnet, dass** das System (40) zur Überhitzung der Gase (GS) ferner wenigstens eine Ausgangsleitung (TS) zur Rückgewinnung der Gase am Ausgang des Stapels (20) von Festoxyden vom Typ SOEC/SOFC umfasst.

8. Anordnung nach einem der vorhergehenden Ansprüche, **dadurch gekennzeichnet, dass** jede Spannplatte (45, 46) des Spannsystems (60) wenigstens eine Spannöffnung (54) umfasst, wobei das Spannsystem (60) ferner umfasst:
- wenigstens eine Spannstange (55), die dazu ausgelegt ist, sich durch eine Spannöffnung (54) der oberen Spannplatte (45) hindurch und durch eine entsprechende Spannöffnung (54) der unteren Spannplatte (46) hindurch zu erstrecken, um die Zusammenfügung der oberen (45) und der unteren (46) Spannplatten zu ermöglichen,
- Spannmittel (56, 57, 58) im Bereich jeder Spannöffnung (54) der oberen (45) und der unteren (46) Spannplatte, die dazu ausgelegt sind, mit der wenigstens einen Spannstange (55) zusammen zu wirken, um die Zusammenfügung der oberen (45) und der unteren (46) Spannplatten zu ermöglichen,
- gegebenenfalls wenigstens eine elektrische Isolationsplatte (19), die dazu ausgelegt ist, zwischen dem Stapel (20) von Festoxyden vom Typ SOEC/SOFC und wenigstens einer von der oberen (45) und der unteren (46) Spannplatte angeordnet zu sein.

9. Verfahren zur Herstellung wenigstens eines Systems (40) zur Überhitzung der Gase (GS) am Eingang eines Stapels (20) von Festoxyden vom Typ SOEC/SOFC einer Anordnung (80) nach einem der vorhergehenden Ansprüche, **dadurch gekennzeichnet, dass** es den Schritt der maschinellen Fertigung einer unteren Endplatte zur Überhitzung der Gase (44, 66) und/oder einer oberen Endplatte zur Überhitzung der Gase (43, 65) umfasst, um einen Gaszirkulationskreis (C) zu bilden.

10. Verfahren nach Anspruch 9, **dadurch gekennzeichnet, dass** es den Schritt umfasst, der darin besteht, mittels eines Verfahrens zum Laserdurchstrahlschweißen eine Schließplatte (48) an den Zirkulationskreis (C) der unteren Endplatte zur Überhitzung der Gase (44, 46) und/oder der oberen Endplatte zur Überhitzung der Gase (43, 65) anzustücken, insbesondere zwei Schließplatten (48) auf beiden Seiten der unteren Endplatte zur Überhitzung der Gase (44, 66) und/oder der oberen Endplatte zur Überhitzung der Gase (43, 65).

## Claims

1. Assembly (80), including:
- a SOEC/SOFC-type solid oxide stack (20) operating at high temperature, including:
- a plurality of electrochemical cells (41) each formed of a cathode, an anode and an electrolyte inserted between the cathode and the anode, and a plurality of intermediate interconnectors (42) each arranged between two adjacent electrochemical cells (41),
- an upper end plate (43) and a lower end plate (44), between which the plurality of electrochemical cells (41) and the plurality of intermediate interconnectors (42) are clamped,
- a system (60) for clamping the SOEC/SOFC-type solid oxide stack (20), including an upper clamping plate (45) and a lower clamping plate (46), between which the SOEC/SOFC-type solid oxide stack (20) is clamped,
**characterised in that** it further includes:
- a system (40) for superheating the gases (GS) at the input of the SOEC/SOFC-type solid oxide stack (20), including:
- at least one heating plate (61) integrated in the thickness of at least one of the upper (45) and lower (46) clamping plates suitable for heating the gases to be heated (GE),
- at least one upper gas superheating end plate (65, 43), positioned between the upper clamping plate (45) and the SOEC/SOFC-type solid oxide stack (20), and/or a lower gas superheating end plate (66, 44), positioned between the lower clamping plate (46) and the SOEC/SOFC-type solid oxide stack (20), each gas superheating end plate (65, 43, 66, 44) including a gas circulation circuit (C) from a first end (P1), where the gases to be heated (GE) arrive, to a second end (P2), where the heated gases (GS) are discharged towards the stack (20),
- at least one input duct (62) of the gases to be heated (GE) communicating with the first end (P1) of a gas superheating end plate (65, 43, 66, 44), such that a stream of gas to be heated (GE) entering said at least one input duct (62) circulates in the gas circulation system (C), from the first end (P1) to the second end (P2) to reach the input of the SOEC/SOFC-type solid oxide stack (20).

2. Assembly according to claim 1, **characterised in that** the gas circulation circuit (C) extends in a sinusoidal shape from the first end (P1) to the second end (P2).

3. Assembly according to claim 1 or 2, **characterised in that** said at least one upper gas superheating end plate (65) and/or said at least one lower gas superheating end plate (66) are respectively positioned between the upper clamping plate (45) and the upper end plate (43), and between the lower clamping plate (46) and the lower end plate (44).

4. Assembly according to claim 3, **characterised in that** the gas superheating end plate(s) (65, 66) are positioned between two electrical insulation plates (59), particularly made of mica.

5. Assembly according to claim 1 or 2, **characterised in that** said at least one upper gas superheating end plate (43) and/or said at least one lower gas superheating end plate (44) are respectively formed by the upper end plate (43) and the lower end plate (44), which include a gas circulation circuit (C) from a first end (P1), where the gases to be heated (GE) arrive, to a second end (P2), where the heated gases (GS) are discharged to the stack (20).

6. Assembly according to claim 5, **characterised in that** each gas superheating system (40) includes at least one closing plate (48), particularly two closing plates (48) on either side of the upper gas superheating end plate (43) and/or the lower gas superheating end plate (44), to close the gas circulation circuit (C).

7. Assembly according to any one of the preceding claims, **characterised in that** the gas (GS) superheating system (40) further includes at least one output duct (TS) for recovering the gases at the SOEC/SOFC-type solid oxide stack (20) output.

8. Assembly according to any one of the preceding claims, **characterised in that** each clamping plate (45, 46) of the clamping system (60) includes at least one clamping orifice (54), the clamping system (60) further including:
- at least one clamping rod (55) intended to extend through a clamping orifice (54) of the upper clamping plate (45) and through a corresponding clamping orifice (54) of the lower clamping plate (46) to enable the assembly of the upper (45) and lower (46) clamping plates with one another,
- clamping means (56, 57, 58) at the level of each clamping orifice (54) of the upper (45) and lower (46) clamping plates intended to engage with said at least one clamping rod (55) to enable the assembly of the upper (45) and lower (46) clamping plates with one another,
- optionally at least one electrical insulation plate (19) intended to be situated between the SOEC/SOFC-type solid oxide stack (20) and at least one of the upper (45) and lower (46) clamping plates.

9. Method for manufacturing at least one system (40) for superheating the gases (GS) at the input of a SOEC/SOFC-type solid oxide stack (20) of an assembly (80) according to any one of the preceding claims, **characterised in that** it includes the step of machining a lower gas superheating end plate (44, 66) and/or an upper gas superheating end plate (43, 65) to form a gas circulation circuit (C).

10. Method according to claim 9, **characterised in that** it includes the step consisting of mounting, by means of a transparent laser welding method, a closing plate (48) on the circulation circuit (C) of the lower gas superheating end plate (44, 66) and/or the upper gas superheating end plate (43, 65), particularly two closing plates (48) on either side of the lower gas superheating end plate (44, 66) and/or the upper gas superheating end plate (43, 65).
